**Europäisches Patentamt**

**European Patent Office**

**Office européen des brevets**

(11) Veröffentlichungsnummer: **0 014 842**
**A1**

## (12) EUROPÄISCHE PATENTANMELDUNG

(21) Anmeldenummer: **80100259.3**

(22) Anmeldetag: **21.01.80**

(51) Int. Cl.³: **B 26 B 1/02**

(30) Priorität: **05.02.79 DE 2904279**

(43) Veröffentlichungstag der Anmeldung:
**03.09.80 Patentblatt 80/18**

(84) Benannte Vertragsstaaten:
**AT BE CH FR GB IT NL SE**

(71) Anmelder: **Höptner, Gerd**
**Brüderstrasse 69**
**D-5630 Remscheid(DE)**

(72) Erfinder: **Höptner, Hans-Gerd, Dr. Dipl.-Ing.**
**Güldenwerth 62**
**D-5630 Remscheid(DE)**

(74) Vertreter: **Peerbooms, Rudolf, Dipl.-Phys.**
**Dickmannstrasse 45C**
**D-5600 Wuppertal 2(DE)**

(54) **Handwerkszeug mit einer in den Handgriff einklappbaren Klinge.**

(57) Bei einem mit einer Messer-, Säge-, Schraubendreher-klinge (1) oder dgl. versehenen Handwerkszeug besteht der Handgriff aus zwei gleich langen U-Bügeln (5, 6), die an ihren freien Schenkelenden um jeweils zueinander senkrechte Achsen (7, 8) schwenkbar an ein Klingenhalterstück (3) angelenkt und nacheinander über die Klinge als diese umschließendes Schutzgehäuse schwenkbar sind.

Zur Vermeidung eines Spaltes zwischen den beiden Bodenschenkeln (9,10) der ineinander geschwenkten U-Bügel (5, 6) sind die beiden Achsen (7, 8) in Klingenlängsrichtung annähernd um die Stärke des Bodenschenkels (9, 10) der U-Bügel (5, 6) gegeneinander versetzt.

EP 0 014 842 A1

./...

Fig. 2

Patentanmeldung

Anmelder : Gerd Höptner

5630 Remscheid

Handwerkszeug mit einer in den Handgriff
einklappbaren Klinge

Die Erfindung betrifft ein mit einer Messer-, Sägeklinge
oder dgl. versehenes Handwerkszeug, bei welchem der Handgriff aus zwei gleich langen U-Bügeln besteht, die an ihren
freien Schenkelenden um jeweils zueinander senkrechte Achsen
schwenkbar an einem Klingenhalterstück angelenkt sind und
nacheinander über die Klinge als Schutzgehäuse schwenkbar
sind, wobei die Klinge mittels einer Schraube auswechselbar
in einem Aufnahmeschlitz des Klingenhalterstückes befestigt
ist.

Ein derartiges Handwerkszeug ist durch die DE-OS 27 22 446
bekannt. Bei dem dortigen Werkzeug liegt jedoch ein beträchtlicher Spaltraum zwischen den Bodenschenkeln der beiden
U-Bügel vor, und zwar sowohl bei in Arbeitsstellung aufgeklappter als auch bei in Schließstellung eingeklappter Klinge. Abgesehen davon, daß hierdurch das optische Erscheinungsbild stark abträglich beeinträchtigt wird, birgt ein solcher Spalt die Gefahr von Fingerverletzungen oder Quetschungen. Hinzukommt, daß um diesen Spaltraum die Gesamtlänge des Handwerkszeuges unnötig vergrößert ist, da dieser Raum nicht zur Unterbringung der Klinge ausnutzbar ist.

Der Neuerung liegt die Aufgabe zugrunde, den Spalt zwischen den beiden Bodenschenkeln der U-Bügel und die damit verbundenen Nachteile zu vermeiden.

Zur Lösung dieser Aufgabe ist neuerungsgemäß vorgesehen, daß die beiden Achsen in Klingenlängsrichtung annähernd um die Stärke des Bodenschenkels der U-Bügel gegeneinander versetzt sind. Durch diese Maßnahmen wird erreicht, daß in der einen Endstellung der eine U-Bügel und in der anderen Endstellung der andere U-Bügel immer mit engstem Spiel um den jeweils anderen Bügelboden herum verläuft und daß gerade nur so viel Spiel zwischen den beiden Bodenschenkeln der U-Bügel verbleibt, wie für ihre Relativverschwenkung noch erforderlich ist. Es ergibt sich damit ein weitgehend als geschlossener Körper wirkender Handgriff, dessen Innenraum maximal zur Unterbringung der meist angestrebten möglichst langen Klingen ausgenutzt werden kann.

Wenn wie bei dem Handwerkszeug gemäß der DE-OS 27 22 446 die Stärke des Bodenschenkels nur etwa 1 mm beträgt, können für die Bügel-Schwenkachse nicht mehr in der dort gezeigten Weise kreuzweise zueinander orientierte, das Klingenhalterstück durchdringende Nietbolzen verwendet werden, da diese aufeinander stoßen würden. In diesem Falle ist der Neuerung zufolge vorgesehen, daß das Klingenhalterstück aus Druckguß besteht und mit angeformten äußeren Nietbolzen für die Anlenkung der U-Bügel versehen ist.

Gemäß einer Weiterentwicklung der Erfindung kann auch vorgesehen werden, daß die Stärke der Bodenschenkel bis zu etwa 10 mm beträgt, so daß der Schwerpunkt der U-Bügel relativ weit von ihrer Anlenkstelle entfernt liegt. Bei einer solchen Ausbildung kann das Klingenhalterstück entweder mit angeformten Nietbolzen oder auch mit Durchgangsbohrungen zur Aufnahme von einzusetzenden Nietbolzen versehen sein. Die Schwerpunktverlagerung erleichtert die Handhabung des Werkzeuges insbesondere beim Ein- und Ausklappen, da die U-Bügel, falls die Reibung an den Anlenkstellen nicht zu stramm eingestellt wird, nunmehr bequem von einer Hand ausgeführt werden kann.

Die durch die Neuerung erzielte Verbesserung des Verhältnisses zwischen Grifflänge und Länge des Griffinnenraumes bietet die Möglichkeit ohne Vergrößerung der Werkzeuggesamtlänge zugleich auch ein Hilfsmittel zum Klingenwechsel am Werkzeug anzubringen. Der Neuerung zufolge ist hierfür vorgesehen, daß die Klinge an ihrem vorderen Ende mit einem in Klingenlängsrichtung weisenden Vorsprung versehen ist, welcher als Schraubendreherklinge ausgebildet und den Abmessungen der Befestigungsschraube für die Klinge angepaßt ist.

Der Neuerung zufolge kann hierbei das vordere Ende der Klinge durch ein- und beidseitig vorgesehene, schräge, gekrümmte oder stufenförmige Begrenzungskanten auf eine zur Klingenlängsrichtung senkrechte Kante eingeengt sein, deren Länge zwischen dem Halbfachen bis Einfachen der Schraubenschlitzlänge liegt. An ihrem Befestigungsende ist die Klinge der Neuerung zufolge gabelförmig ausgebildet und mit dem Gabelgrund auf einen den Aufnahmeschlitz im Klingenhalterstück durchsetzende, dem Gabelgrund formschlüssig angepaßten Steg aufsetzbar.

Diese Merkmale bieten den Vorteil, daß einmal ohne besonderes Werkzeug ein Klingenwechsel vorgenommen werden kann, indem nunmehr die neue Klinge als Schraubendreher zum Ausbau der alten Klinge, und die alte Klinge als Schraubendreher zum Festspannen der neuen Klinge verwendet werden können. Durch die gabelförmige Ausbildung des Befestigungsendes der Klinge und durch die formschlüssige Anpassung des Gabelgrundes an den Anlagesteg im Schlitz des Klingenhalterstückes wird in Verbindung mit dem durch die Befestigungsschraube gegebenen zweiten Arretierungspunkt ein völlig sicherer Sitz der Klinge am Klingenhalterstück erreicht.

Die Erfindung wird im folgenden anhand eines in der Zeichnung dargestellten Ausführungsbeispieles näher dargestellt. In der Zeichnung zeigen :

Fig. 1 in Seitenansicht eine Klappsäge, in Gebrauchsstellung aufgeklappt,

Fig. 2 die Klappsäge um 45° um ihre Längsachse gedreht
gegenüber Fig. 1 in einer Zwischenstellung, in
der mit dem Einklappen des Werkzeuges begonnen ist,

Fig. 3 eine Seitenansicht auf das Klingenhalterstück
der Klappsäge,

Fig. 4 verschiedene Formen des vorderen Klingenendes,

Fig. 5 das hintere Klingenende und

Fig. 6 einen Längsschnitt durch das Klingenhalterstück.

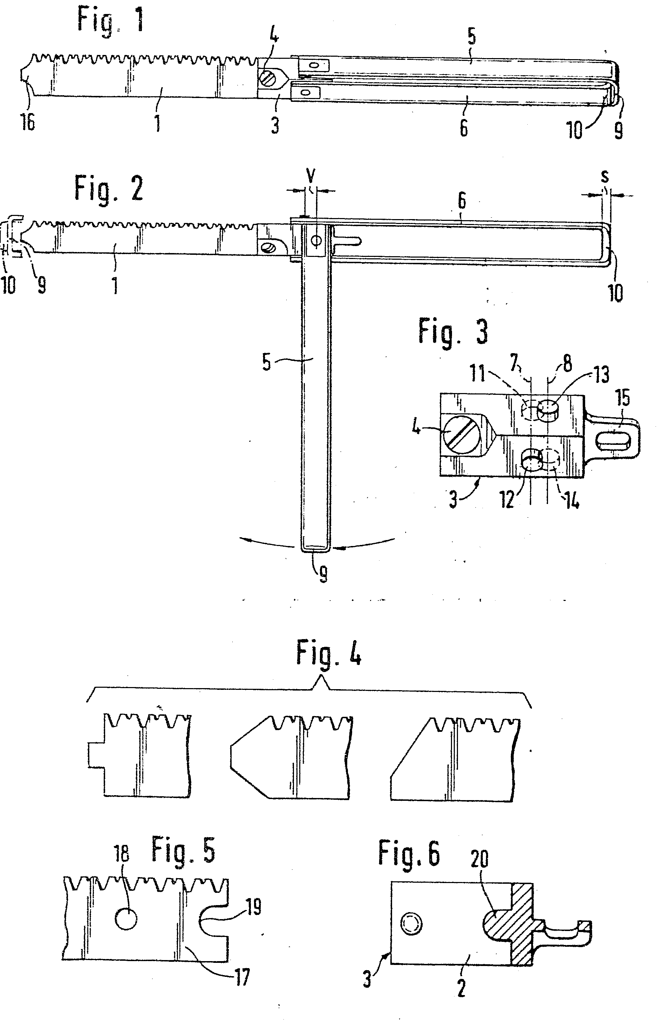

Die Fig. 1 und 2 zeigen eine Sägeklinge 1, die an ihrem hinteren Ende in einen Schlitz 2 (vergl. auch Fig. 6) eines Klingenhalterstückes 3 eingesteckt ist und mittels einer Schraube 4 am Klingenhalterstück festgespannt ist. Das Klingenhalterstück besitzt einen Vierkantquerschnitt, wobei der Aufnahmeschlitz für die Sägeklinge in einer Diagonalebene des Klingenhalterstückes liegt. An zwei jeweils paarweise einander gegenüber liegenden Seiten des Klingenhalterstückes sind jeweils die freien Schenkelenden von zwei gleich langen U-Bügeln 5, 6 um zueinander senkrechte Achsen 7, 8 schwenkbar gelagert. Die Breite der Schenkel der U-Bügel ist jeweils etwa geringer als die Innenweite der U-Bügel, so daß diese über bzw. ineinander geschwenkt werden können. Die beiden Schwenkachsen 7, 8 der Bügel 5, 6 sind jeweils eine Strecke $V$ in Längsrichtung der Klappsäge gegeneinander versetzt. Diese Versetzung $V$ ist gleich bzw. geringfügig größer als die Stärke $S$ der Bodenschenkel 9, 10 der U-Bügel. Infolge dieser Versetzung liegt in der Gebrauchsstellung nach Fig. 1 der Bodenschenkel 9 des einen Bügels 5 mit engem Spiel außen neben dem Bodenschenkel 10 des anderen Bügels. Nach dem Einklappen (vergleiche die gestrichelte Darstellung in Fig. 2) liegt dagegen der Bodenschenkel 9 des Bügels 5 nunmehr innen, während der Bodenschenkel 10 des anderen Bügels 6 außen liegt. Auch in dieser Stellung ist nur ein minimales Spiel zwischen den beiden Bodenschenkeln 9, 10 gegeben.

Wie aus Fig. 3 ersichtlich ist, ist das Klingenhalterstück 3 zusammen mit den nach außen abragenden, die Achsen 7 und 8 bildenden Nietbolzen 11, 12, 13, 14 einstückig aus Druckguß gefertigt. Ferner ist an die Rückseite des Klingenhalterstückes 3 noch eine Aufhängeöse 15 angeformt.

Das vordere Ende der Klinge 1 ist mit einem als Schraubendreherklinge für die Befestigungsschraube 4 verwendbaren Vorsprung 16 versehen, dessen Seitenkanten konkav gekrümmt sind. Andere Ausführungsmöglichkeiten des vorderen Klingenendes sind in Fig. 4 gezeigt.

Fig. 5 zeigt das Befestigungsende 17 der Klinge, welche mit einem Loch 18 für die Befestigungsschraube 4 versehen und am Ende gabelförmig ausgebildet ist. Die Klinge wird mit dem Gabelgrund 19 auf einen den Schlitz 2 im Klingenhalterstück 3 durchsetzenden, den Gabelgrund 19 formmäßig angepaßten Steg 20 aufgesetzt. Die Gabelöffnung ist als ein Langloch mit parallelen Seitenwänden ausgebildet, die mit engem Spiel an den parallelen Seitenflächen des Steges 20 anliegen. Durch diese Führung ist der Abstand zwischen Loch 18 und dem Grund des Schlitzes 2 für den Sitz der Klinge weitgehend unerheblich, so daß keine kritischen Fertigungstoleranzen eingehalten werden müssen.

Ansprüche

1. Mit einer Messer-, Säge-, Schraubendreherklinge oder dgl. versehenes Handwerkszeug, bei welchem der Handgriff aus zwei gleich langen U-Bügeln besteht, die an ihren freien Schenkelenden um jeweils zueinander senkrechte Achsen schwenkbar an ein Klingenhalterstück angelenkt und nacheinander über die Klinge als diese umschließendes Schutzgehäuse schwenkbar sind, wobei die Klinge mittels einer Schraube auswechselbar in einem Aufnahmeschlitz des Klingenhalterstückes befestigt ist, dadurch gekennzeichnet, daß die beiden Achsen (7, 8) in Klingenlängsrichtung annähernd um die Stärke des Bodenschenkels (9, 10) der U-Bügel (5, 6) gegeneinander versetzt sind.

2. Handwerkszeug nach Anspruch 1, dadurch gekennzeichnet, daß das Klingenhalterstück (3) aus Druckguß besteht und mit angeformten Nietbolzen (11, 12, 13, 14) für die Anlenkung der U-Bügel (5, 6) versehen ist.

3. Handwerkszeug nach den Ansprüchen 1 oder 2, dadurch gekennzeichnet, daß die Stärke der Bodenschenkel bis zu 10 mm beträgt.

4. Handwerkszeug nach den Ansprüchen 1 oder 2, dadurch gekennzeichnet, daß die Klinge an ihrem vorderen Ende mit einem in Klingenlängsrichtung weisenden Vorsprung (16) versehen ist, welcher als Schraubendreherklinge ausgebildet und den Abmessungen der Befestigungsschraube (4) für die Klinge angepaßt ist.

5. Handwerkszeug nach Anspruch 4, dadurch gekennzeichnet, daß das vordere Ende der Klinge (1) durch ein- und beidseitig vorgesehene, schräge, gekrümmte oder stufenförmige Begrenzungskanten auf eine zur Klingenlängsrichtung senkrechte Kante eingeengt ist, deren Länge zwischen dem Halbfachen bis Einfachen der Schraubenschlitzlänge liegt.

6. Handwerkszeug nach Anspruch 4, dadurch gekennzeichnet, daß das Befestigungsende (17) der Klinge (1) gabelförmig ausgebildet ist und mit dem Gabelgrund (19) auf einen den Aufnahmeschlitz (2) im Klingenhalterstück (3) durchsetzenden, formschlüssig angepaßten Steg (20) aufsetzbar ist.

Fig. 1

Fig. 2

Fig. 3

Fig. 4

Fig. 5

Fig. 6

0014842

**Europäisches Patentamt**

**EUROPÄISCHER RECHERCHENBERICHT**

Nummer der Anmeldung

EP 80 10 0259

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D,X | <u>DE - A - 2 722 446</u> (HOPTNER) <br> * Seiten 6,7; Zeichnungen * | 1-3,6 |
| | -- | |
| | <u>GB - A - 617 824</u> (FAIREST) <br> * Seiten 1,2; Zeichungen * | 1-3 |
| | -- | |
| | <u>GB - A - 568 555</u> (HOWEY) <br> * Seiten 2,3; Zeichungen * | 1-3 |
| | -- | |
| | <u>GB - A - 329 143</u> (POOR) <br> * Seiten 1,2; Zeichungen * | 1-3 |
| | ---- | |

**KLASSIFIKATION DER ANMELDUNG (Int.Cl. 3)**

B 26 B 1/02

**RECHERCHIERTE SACHGEBIETE (Int. Cl. 3)**

B 26 B
B 27 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-05-1980 | WOHLRAPP |

EPA form 1503.1 06.78